# EUROPÄISCHE PATENTSCHRIFT

(11) **EP 0 392 335 B1**
(45) Veröffentlichungstag und Bekanntmachung des Hinweises auf die Patenterteilung: **01.12.1993**
(21) Anmeldenummer: 90106454.3
(22) Anmeldetag: 04.04.1990
(51) Int. Cl.: B62B 3/10

(54) **Stapelbarer Einkaufswagen**
Stackable shopping trolley
Chariot d'achat emboîtable

(30) Priorität: 08.04.1989 DE 8904428 U; 06.03.1990 DE 9002580 U
(43) Veröffentlichungstag der Anmeldung: 17.10.1990
(73) Patentinhaber: WANZL METALLWARENFABRIK GMBH, D-89336 Leipheim (DE)
(72) Erfinder: Eberlein, Herbert, Dipl.-Ing., D-8871 Bubesheim (DE)
(74) Vertreter: Nuss, Pierre

(56) Entgegenhaltungen:
- DE-A- 3 444 969
- DE-U- 8 500 639
- FR-A- 2 488 561
- GB-A- 847 976

## Beschreibung

Die Erfindung betrifft einen Stapelbaren Einkaufswagen, mit einem mit Rollen ausgestatteten Fahrgestell, das aus zwei mittels weiterer Teile miteinander verbundenen, nach oben gekrümmten und konisch angeordneten Längsholmen besteht, welche mit ihren Endbereichen die Rollen und mit ihrem oberen Krümmungsbereich einen Korb mit einer Schiebeanordnung tragen und die Längsholme durch übereinander angeordnete, auf Abstand gehaltene Drähte oder Stäbe gebildet sind, derart, daß die Längsholme je eine zumindest im vorderen Bereich der Längsholme in Schieberichtung des Einkaufswagens geneigt angeordnete Führung für eine unterhalb des Korbes angeordnete, entlang der Schieberichtung des Einkaufswagens durch Anschläge begrenzt verschiebbare Ablage bilden und die zum Abstellen von Ware bestimmte Ablage in ihrer Nichtgebrauchslage nach vorne geneigt, größtenteils oder ausschließlich innerhalb des Korbgrundrisses angeordnet ist und in ihrer Gebrauchslage nach rückwärts über den Korbgrundriß hinausragt, wobei die Ablage mit ihrem vorderen Ende in den Führungen gelagert und mit ihrem entgegengesetzten Ende außerhalb der Führungen am Fahrgestell abgestützt ist und ein oberhalb eines ersten Querverbindungsteiles angeordnetes, die Längsholme in deren vorderem Bereich verbindendes, die Stabilität des Fahrgestelles erhöhendes weiteres Querverbindungsteil angeordnet ist, das als Anschlag für die Ablage vorgesehen sein kann.

Einkaufswagen dieser Art sind zum bevorzugten Transport von Getränkekisten vorgesehen.

Bei einem bekannten und in der EP 0 402 551 A1 beschriebenen Einkaufswagen sind die Längsholme des Fahrgestelles abschnittweise durch wenigstens zwei übereinander angeordnete starke Drähte oder Stäbe gebildet, wobei jener Abschnitt der Längsholme, der nur durch zwei Drähte gebildet ist und der sich im vorderen Bereich des Fahrgestelles befindet, gleichzeitig als Führung für eine verschiebbare und unter dem Korb befindliche, in dieser Lage nach vorne geneigte Ablage vorgesehen ist. Die Ablage besitzt beidseitig an ihrem vorderen Ende je einen Auflageabschnitt, wobei jeder Auflageabschnitt in je einer Führung schiebebeweglich geführt ist. Die Verschiebbarkeit der Ablage nach vorne wird durch ein die Längsholme verbindendes Querverbindungsteil, welches als Anschlag für die Ablage dient, begrenzt. Das Querverbindungsteil ist als gerader Stab gestaltet, der zwischen den Drähten der Längsholme angeordnet und mit diesen verbunden ist. Ein weiteres vorderendig angeordnetes U-förmiges Querverbindungsteil, das ebenfalls die Längsholme verbindet, ist zum Tragen der vorderen Fahrrollen vorgesehen.
Die Erfordernisse, die zur Entwicklung eines derartigen Einkaufswagens geführt haben, lagen darin, die Benutzung der verschiebbaren Ablage in jener Lage, in der sie sich unter dem Korb befindet, unbenutzbar zu machen, um zu vermeiden, daß Personen mit Hilfe der Ablage in unlauterer Absicht unbezahlte Ware aus dem Markt schmuggeln. Die Forderung, auf diese Weise Warendiebstahl zu vermeiden, vermag der eben beschriebene Einkaufswagen nicht zu erfüllen, da dessen stabförmiges Querverbindungsteil so angeordnet ist, daß es in Nichtgebrauchslage der Ablage nicht nur einen Anschlag für die Ablage selbst, sondern auch für Ware bildet, die in Nichtgebrauchslage der Ablage verbotenerweise trotzdem auf diese gestellt werden kann. Das Querverbindungsteil verhindert somit nicht das gewollte Abrutschen der Ware von der geneigten Ablage.

Die Aufgabe der Erfindung besteht darin, bei einem gattungsgemäßen Einkaufswagen diesen entscheidenden Nachteil zu vermeiden und anzustreben, daß die Möglichkeit eines unlauteren Abstellens von Ware auf der in Nichtgebrauchslage befindlichen Ablage nahezu ausgeschlossen ist.

Die Lösung der Aufgabe besteht darin, daß zumindest der größte Teil einer mit der Ladefläche der Ablage identischen Ebene, die sich von oben betrachtet zwischen den Längsholmen des Fahrgestelles befindet, und die in Nichtgebrauchslage der Ablage in Schieberichtung des Einkaufswagens geneigt ist, über dem Querverbindungsteil und über dem wenigstens einen Anschlag angeordnet ist.

Nun ist wohl durch das deutsche Gebrauchsmuster G 85 00 639.4 ein Einkaufswagen bekannt, der eine nach rückwärts herausschwenkbare Ablage zum Abstellen größerer Gegenstände besitzt. Im Gegensatz zum gattungsgemässen Einkaufswagen ist die Ablage bei diesem Einkaufswagen an zwei Streben aufgehängt, die nach oben zum Handgriff führen und dort um eine waagrechte Achse verschwenkbar angelenkt sind. Vorderendig stützt sich die Ablage in Gebrauchslage an einem unterhalb des Korbes befindlichen Bügel ab. Auch befindet sich in Nichtgebrauchslage ein Großteil der Ladefläche der Ablage unterhalb einer vorderen Querverbindung, die wohl im genannten Gebrauchsmuster nicht dargestellt, bei inzwischen auf den Markt gekommenen Einkaufswagen dieser Art jedoch vorgesehen ist, so daß diese Querverbindung ebenfalls eine Anschlagfunktion für unerlaubt abgestellte Ware ausüben kann. Schließlich unterscheidet sich der genannte Einkaufswagen vom gattungsgemäßen Einkaufswagen vor allem dadurch, daß an den Längsholmen seines Fahrgestelles keine Führungen für die Ablage vorgesehen sind.

Auch durch die europ. Patentschrift 0 349 423 ist ein Einkaufswagen mit einer rückwärtigen Ablage bekannt. Im Gegensatz zum vorgeschlagenen neuen Einkaufswagen besteht beim genannten Einkaufswagen das Fahrgestell aus einem trapezförmigen Grundrahmen, an dessen rückwärtigem Ende beidseitig zwei Träger nach oben gerichtet sind, die den Korb tragen. An zwei die Träger verbindende Querstäbe ist eine mit seitlichen Führungen ausgestattete Ablage eingehängt, durch welche die Querstäbe hindurchgeführt sind. Auch dieser Einkaufswagen weist keine Führungen an Längsholmen auf und die Ebene seiner Ladefläche führt, folgt man der Zeichnung, in der Verlängerung nach vorne unterhalb der vorderen Querverbindung des Fahrgestelles hindurch, so daß diese Querverbindung ebenfalls als Anschlag wirksam werden kann.

Ein weiterer Einkaufswagen mit einer Ablage, die unterhalb des Korbes angeordnet nach rückwärts hervorgezogen und wieder in ihre ursprüngliche Lage zurückgeschoben werden kann, ist durch die britische Patentschrift GB-A-847,976 bekannt. Bei diesem Einkaufswagen ist die als flacher Korb gestaltete Ablage schiebebeweglich an einem Rahmen vorgesehen, der am vorderen Bereich des Fahrgestelles befestigt, um eine horizontale Achse schwenkbar gelagert ist. Beim Beladen der Ablage senkt sich diese in eine horizontale Lage. Unbeladen nimmt die Ablage wieder von selbst eine nach vorne geneigte Lage ein, damit sich gleiche leere Einkaufswagen platzsparend ineinanderschieben lassen. Die Verschiebbarkeit der Ablage entlang des schwenkbaren Rahmens soll dazu dienen, das Be- und Entladen der Ablage zu erleichtern. Auch mit diesem Einkaufswagen läßt sich nicht verhindern, daß Ware in unlauterer Absicht auf die Ablage gestellt werden kann, denn unabhängig davon, ob sich die Ablage komplett unter dem Korb befindet, oder ob sie nach rückwärts hervorgezogen ist, sie läßt sich immer beladen. Eine Nichtgebrauchslage der Ablage kennt dieser Einkaufswagen nicht. Unterstellt, man würde eine nach vorne geneigte leere Ablage mit einem sehr leichten Gegenstand beladen und die Ablage würde ihre nach vorne geneigte Lage beibehalten, der Gegenstand würde nicht von der Ablage fallen, da er an der vorderen Stirnwand der korbartigen Ablage hängen bliebe. Der genannte Einkaufswagen ist somit nicht in der Lage, die der vorliegenden Erfindung zugrundeliegende Aufgabe zu lösen.

Schließlich ist durch die DE-A-3 444 969 ein in Fig. 1 dargestellter Einkaufswagen bekannt, der unterhalb seines Korbes zwei Führungen aufweist, in denen eine Ablage entlang der Schieberichtung des Einkaufswagens schiebebeweglich geführt ist. Aufgrund seiner besonderen Bauweise ist bei diesem Einkaufswagen kein Querverbindungsteil erforderlich, das im vorderen Bereich der Längsholme angebracht, eine Erhöhung der Stabilität des Fahrgestelles zu bewirken hätte. Die zitierte Schrift vermittelt daher keine Hinweise darüber, wie bei einem Vorhandensein einer im Bereich der Führungen angeordneten, die Längsholme verbindenden Querverbindung das angestrebte Abrutschen von Ware von der in Nichtgebrauchslage befindlichen Ablage erreichbar wäre.

Der erfindungsgemäße Einkaufswagen unterscheidet sich in vorteilhafter Weise vom bisherigen relevanten Stand der Technik dadurch, daß durch die zweckmäßige Anordnung und Gestaltung des Querverbindungsteiles keine Ware mehr in unlauterer Absicht auf die in Nichtgebrauchslage befindliche Ablage gelegt werden kann, da das Querverbindungsteil aufgrund seiner gewählten Lage nicht imstande ist, derart abgestellte Ware vor dem Abrutschen von der schräg angeordneten Ablage zu bewahren. Es ist deshalb nahezu ausgeschlossen, mit dem erfindungsgemäßen Einkaufswagen auf der Ablage befindliche Ware unbezahlt aus einem Markt zu schmuggeln.

Die Erfindung wird anhand von Ausführungsbeispielen näher erläutert. Es zeigt
- Fig. 1: in räumlicher Darstellung einen erfindungsgemäßen Einkaufswagen;
- Fig. 2: eine Draufsicht auf das Fahrgestell mit Ablage;
- Fig. 3: eine Seitenansicht auf das Fahrgestell mit Ablage sowie
- Fig. 4 und 5: den vorderen Bereich des Fahrgestelles zweier Einkaufswagen mit unterschiedlich angeordneten Querverbindungsteilen.

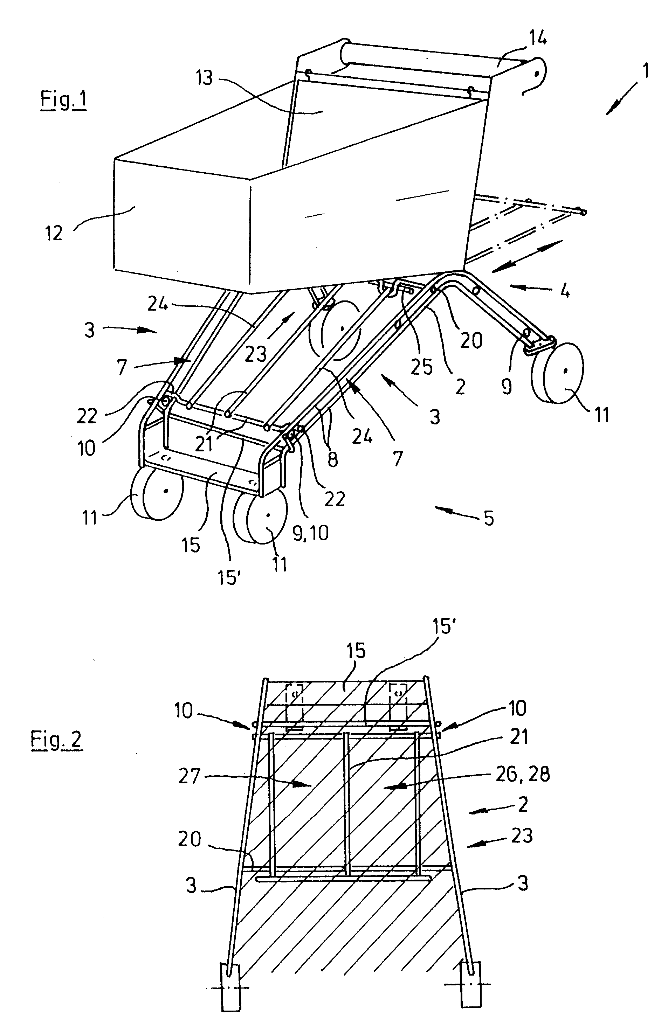

Der in Fig. 1 dargestellte Einkaufswagen 1 weist ein in Schieberichtung sich verengendes, also konisches Fahrgestell 2 auf, das vier Rollen 11 trägt. Auf dem Fahrgestell 2 ist ein ebenfalls konisch gestalteter Korb 12 bevorzugt ortsfest angeordnet, dessen Rückwand 13 in bekannter Weise um eine waagrechte Achse verschwenkbar gelagert ist, so daß derart gestaltete Einkaufswagen 1, wie auch solche Einkaufswagen 1, deren Körbe 12 hochschwenkbar sind, platzsparend ineinandergeschoben, also gestapelt, werden können. Am hinteren Ende des Korbes 12 ist eine Schiebeanordnung 14, etwa in Form einer Griffstange vorgesehen. Das Fahrgestell 2 ist durch zwei Längsholme 3 gebildet, die vorderendig durch wenigstens ein bevorzugt flachstahlartiges Querverbindungsteil 15 verbunden sind. Die Längsholme 3, in bekannter Weise im wesentlichen als nach oben gekrümmte Teile gestaltet, sind in ihrem oberen Bereich 4 durch einen Quersteg 20 ebenfalls miteinander verbunden. Zweckmäßigerweise bestehen die Längsholme 3 aus zwei übereinander angeordneten Stäben oder Drähten 8, welche jeweils abschnittweise durch Verbindungsteile 9, beispielsweise Stahlkugeln oder Distanzstücke, zu je einem Teil verschweißt sind. Dadurch entsteht zumindest im vorderen Bereich 5 eines jeden Längsholmes 3 je eine in Schieberichtung geneigte Führung 7. In jeder Führung 7 ist ein fingerartiger Stützabschnitt 22 schiebebeweglich geführt, wobei jeder Stützabschnitt 22 einer Ablage 21 angehört, die in Nichtgebrauchslage unterhalb des Korbes 12 zwischen den Längsholmen 3 entlang der Schieberichtung des Einkaufswagens 1 schiebebeweglich gelagert ist. Entgegengesetzt zu den Stützabschnitten 22 stützt sich die Ablage 21 in bekannter Weise mit ihrem anderen Ende 23 am entsprechend geformten, auch seitliche Führungen bildenden Quersteg 20 ab, so daß sich die Ablage 21 aus der Nichtgebrauchslage, wie gezeichnet, in eine Gebrauchslage (strichpunktierte Darstellung) und wieder zurück verschieben läßt, siehe Pfeil. In Gebrauchslage stützt sich die Ablage 21 mit ihren äußeren Längsstäben 24, die endseitig durch je einen Querstab 25 verbunden sind, am Quersteg 20 und mit ihren Stützabschnitten 22 in den beiden Führungen 7 ab. Gleiches gilt auch für die Nichtgebrauchslage, wobei die Ablage 21 in dieser Lage auch noch mit ihren beiden Stützabschnitten 22 an je einem Verbindungsteil 9 anliegt, die somit als Anschläge 10 wirken. Das vorderendige Querverbindungsteil 15 trägt die vorderen Rollen 11, während die hinteren Rollen 11 an dem hinteren Ende der Längsholme 3 befestigt sind. Zwischen den Anschlägen 10 und dem Querverbindungsteil 15 ist ein weiteres Querverbindungsteil 15' vorgesehen, das im Bereich des vorderen Fahrgestellendes angeordnet, die beiden Längsholme 3 miteinander verbindet.

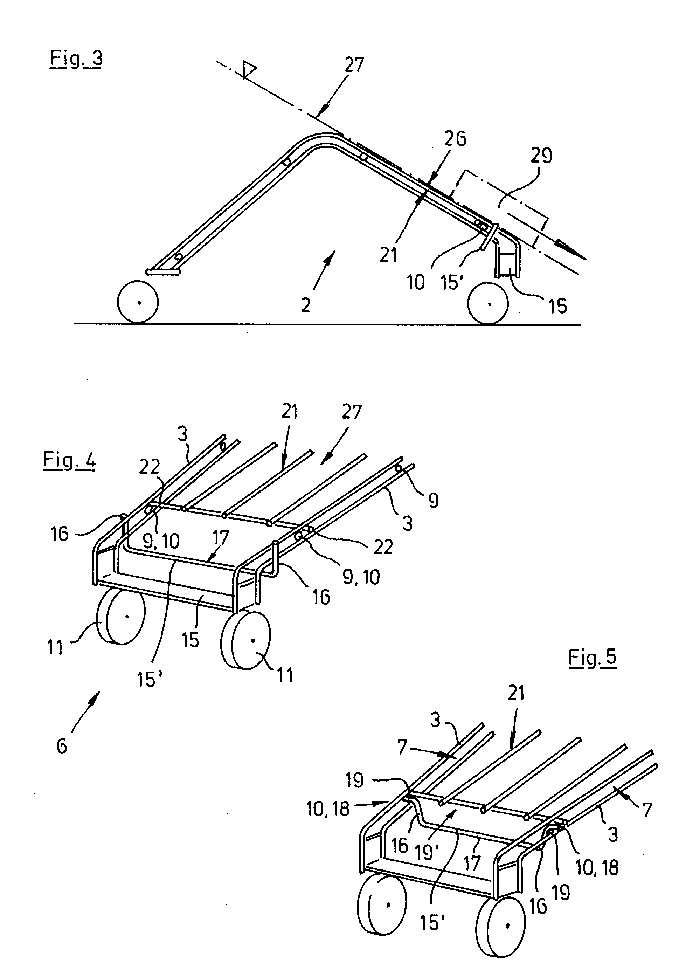

Anhand der Fig. 2 und 3 läßt sich die zweckmäßige Gestaltung des Fahrgestelles 2 mit Ablage 21 beschreiben. In Fig. 2 ist das Fahrgestell 2 und die Ablage 21 von oben betrachtet dargestellt. Man erkennt die beiden konisch angeordneten Längsholme 3 des Fahrgestelles 2, die vorderendig durch das Querverbindungsteil 15 und am hinteren Ende 23 der Ablage 21 durch den Quersteg 20 miteinander verbunden sind. Die Ablage 21 befindet sich in Nichtgebrauchslage. In der Zeichnung ist durch Schraffur eine Ebene 27 dargestellt, welche mit der durch die in Schieberichtung des Einkaufswagens 1 geneigten Ladefläche 26 der Ablage 21 gebildeten Ebene 28 identisch ist, diese beinhaltet und bis zum vorderen Fahrgestellende 6 reicht. Die Ebene 28 ist also Bestandteil der Ebene 27. In Fig. 3 ist das Fahrgestell 2 nebst Ablage 21 von der Seite betrachtet dargestellt. Die in Schieberichtung abfallende Ebene 27 ist strichpunktiert eingezeichnet. Sowohl der wenigstens eine Anschlag 10, als auch das zuvorderst angeordnete Querverbindungsteil 15 und das höher befindliche Querverbindungsteil 15' sind unterhalb der Ebene 27 angeordnet, so daß weder der oder die Anschläge 10, noch die Querverbindungsteile 15, 15' eine Anlage für auf die Ladefläche 26 der Ablage 21 abgestellte Gegenstände bilden. Der in der Zeichnung mit abwärts gerichtetem Pfeil dargestellte, auf der Ablage 21 befindliche quaderförmige Gegenstand 29 wird von der Ablage 21 nicht gehalten. Er bewegt sich entlang der geneigten Ebene 27 und fällt zwangsläufig nach unten.

Fig. 4 zeigt das vordere Fahrgestellende 6 des Einkaufswagens 1. Dargestellt sind ein Teil der Längsholme 3 sowie ein Teil der Ablage 21. Vorderendig sind die Längsholme 3 durch das die Rollen 11 tragende Querverbindungsteil 15 miteinander verbunden. Die Ablage 21 liegt mit ihren Stützabschnitten 22 an den Anschlägen 10 an, die durch Verbindungsteile 9 gebildet sind. Zwischen den Anschlägen 10 und dem Querverbindungsteil 15 ist das etwas höher angeordnete Querverbindungsteil 15' vorgesehen, das aus Stabilitätsgründen erforderlich ist. Damit dieses beispielsweise aus einem Rundstab gebildete Querverbindungsteil 15' nicht in die Ebene 27 ragt, ist es zweckmäßigerweise U-förmig gestaltet, wobei dessen nach oben weisende Schenkel 16 innen- oder außenseitig an den Längsholmen 3 befestigt sind, während sich der die Schenkel 16 verbindende Abschnitt 17 des Querverbindungsteiles 15' unterhalb der Ebene 27 befindet. Ein auf die in Nichtgebrauchslage befindliche Ablage 21 abgestellter Gegenstand 29 hat somit keinen Halt und fällt nach unten.

Will man auf zwei separate Anschläge verzichten, kann, wie in Fig. 5 gezeigt, auch das höher angeordnete Querverbindungsteil 15' als Anschlag 10 wirken. Das stabförmig gestaltete Querverbindungsteil 15' ist mit seinen Enden 18 in die Führungen 7 der Längsholme 3 eingreifend, mit diesen verschweißt. Kurz nach Verlassen der Führungen 7 verläuft das Querverbindungsteil 15' je einen Schenkel 16 bildend nach unten und weist einen waagrechten Abschnitt 17 auf, der die beiden Schenkel 16 verbindet. Die Enden 18 des Querverbindungsteiles 15' bilden somit einen Anschlag 10 für die Ablage 21. Bei diesem Beispiel läßt es sich nicht ganz vermeiden, daß ein kurzer Abschnitt 19 der Enden 18 oder der Schenkel 16 in die Ebene 27 ragen. Streng genommen bilden diese Abschnitte 19 kleine Anschläge für Ware, die auf die in Nichtgebrauchslage befindliche geneigte Ablage 21 gestellt werden können. Allerdings verbleibt auf der Ablage 21 höchstens ein solcher Gegenstand, der etwa genau so breit ist, wie die Entfernung der beiden Abschnitte 19. Alle anderen Gegenstände fallen trotzdem von selbst von der Ablage 21, da sie entweder zu klein oder zu schmal sind, um von den Abschnitten 19 am Herabfallen gehindert zu werden. Im praktischen Beispiel wäre die Breite eines Abschnittes (19) 12 mm und der freie Abschnitt 19' annähernd 400 mm, so daß das Vorhandensein der Abschnitte 19 im Grunde als vernachlässigbar eingestuft werden kann.

## Patentansprüche

1. Stapelbarer Einkaufswagen (1), mit einem mit Rollen (11) ausgestatteten Fahrgestell (2), das aus zwei mittels weiterer Teile (15, 15', 20) miteinander verbundenen, nach oben gekrümmten und konisch angeordneten Längsholmen (3) besteht, welche mit ihren Endbereichen die Rollen (11) und mit ihrem oberen Krümmungsbereich einen Korb (12) mit einer Schiebeanordnung (14) tragen und die Längsholme (3) durch übereinander angeordnete, auf Abstand gehaltene Drähte oder Stäbe (8) gebildet sind, derart, daß die Längholme (3) je eine zumindest im vorderen Bereich der Längsholme (3) in Schieberichtung des Einkaufswagens (1) geneigt angeordnete Führung (7) für eine unterhalb des Korbes (12) angeordnete, entlang der Schieberichtung des Einkaufswagens (1) durch Anschläge (10, 20) begrenzt verschiebbare Ablage (21) bilden und die zum Abstellen von Ware bestimmte Ablage (21) in ihrer Nichtgebrauchslage nach vorne geneigt, größtenteils oder ausschließlich innerhalb des Korbgrundrisses angeordnet ist und in ihrer Gebrauchslage nach rückwärts über den Korbgrundriß hinausragt, wobei die Ablage (21) mit ihrem vorderen Ende in den Führungen (7) gelagert und mit ihrem entgegengesetzten Ende außerhalb der Führungen (7) am Fahrgestell (2) abgestützt ist und ein oberhalb des Querverbindungsteiles (15), die Längsholme (3) in deren vorderem Bereich verbindendes, die Stabilität des Fahrgestelles (2) erhöhendes weiteres Querverbindungsteil (15') angeordnet ist, das als Anschlag (10) für die Ablage (21) vorgesehen sein kann, dadurch **gekennzeichnet**, daß zumindest der größte Teil einer mit der Ladefläche (26) der Ablage (21) identischen Ebene (27), die sich von oben betrachtet zwischen den Längsholmen (3) des Fahrgestelles (2) befindet, und die in Nichtgebrauchslage der Ablage (21) in Schieberichtung des Einkaufswagens (1) geneigt ist, über dem weiteren Querverbindungsteil (15') und über dem wenigstens einen Anschlag (10) angeordnet ist.

2. Stapelbarer Einkaufswagen nach Anspruch 1, dadurch **gekennzeichnet**, daß das Querverbindungsteil (15') U-förmig gestaltet und mit seinen nach oben gericheten Schenkeln (16) an den Längsholmen (3) des Fahrgestelles (2) befestigt ist.

3. Stapelbarer Einkaufswagen nach Anspruch 1, dadurch **gekennzeichnet**, daß das Querverbindungsteil (15') mit seinen Enden (18) in die Führungen (7) eingefügt und an diesen (7) befestigt ist und zwei nach unten gerichtete Schenkel (16) aufweist, die durch den Abschnitt (17) miteinander verbunden sind.

4. Stapelbarer Einkaufswagen nach wenigstens einem der Ansprüche 1 bis 3, dadurch **gekennzeichnet**, daß durch das Quersverbindungsteil (15') ein Anschlag (10) zur Begrenzung der Verschiebbarkeit der Ablage (21) in die Nichtgebrauchslage gebildet ist.

5. Stapelbarer Einkaufswagen nach wenigstens einem der Ansprüche 1 bis 3, dadurch **gekennzeichnet**, daß durch je ein zwischen den Stäben oder Drähten (8) angeordnetes Verbindungsteil (9) ein Anschlag (10) zur Begrenzung der Verschiebbarkeit der Ablage (21) in die Nichtgebrauchslage gebildet ist.

## Claims

1. A stackable shopping trolley (1) having a base frame (2) which is provided with casters (11) and comprises two upwardly curved, conically arranged longitudinal bars (3) which are connected to each other by means of further parts (15, 15', 20) and carry the casters (11) on their end regions and a basket (12) with a pushing arrangement (14) on their upper curved regions, and the longitudinal bars (3) are formed by wires or rods (8) arranged one above the other and held apart in such a way that the longitudinal bars (3) each form a guide (7) for a shelf (21) arranged below the basket (12) and displaceable in the pushing direction of the shopping trolley (1) within the limits formed by stops (10, 20), the said guide (7) being arranged so as to be inclined downwardly in the pushing direction of the shopping trolley (1) at least in the front region of the longitudinal bars (3), and the shelf (21), intended for depositing goods, is inclined forwards in its position of non-use and arranged mainly or exclusively within the outline of the basket, and projects backwards beyond the basket outline in its position of use, wherein the shelf (1) is mounted in the guides (7) at its front end and is supported on the base frame (2) outside the guides (7) at its opposite end, and a further transverse connecting part (15') connecting the longitudinal bars (3) in the front region thereof and increasing the stability of the base frame (2) is arranged above the transverse connecting part (15) and can be provided as a stop (10) for the shelf (21), characterised in that at least the majority of a plane (27) corresponding to the deposition surface (26) of the shelf (21) is arranged above the further transverse connecting part (15') and above the at least one stop (10), the said plane (27) being located between the longitudinal bars (3) of the base frame (2) when viewed from above and being inclined downwardly in the pushing direction of the shopping trolley (1) when the shelf (21) is in the position of non-use.

2. A stackable shopping trolley according to claim 1, characterised in that the transverse connecting part (15') is U-shaped and is fixed to the longitudinal bars (3) of the base frame (2) by its upwardly directed arms (16).

3. A stackable shopping trolley according to claim 1, characterised in that the ends (18) of the transverse connecting part (15') are inserted into the guides (7) and fastened thereto and the transverse connecting part (15') has two downwardly directed arms (16) which are connected to each other by the portion (17).

4. A stackable shopping trolley according to at least one of claims 1 to 3, characterised in that a stop (10) for limiting the displaceability of the shelf (21) into the position of non-use is formed by the transverse connecting part (15').

5. A stackable shopping trolley according to at least one of claims 1 to 3, characterised in that a stop (10) for limiting the displaceability of the shelf (21) into the position of non-use is formed by a connecting part (9) arranged between the rods or wires (8).

## Revendications

1. Chariot à provisions emboîtable (1), comprenant un châssis de roulement (2) équipé de roulettes (11) et constitué par deux poutres longitudinales (3) qui sont reliées entre elles au moyen d'autres pièces (15, 15', 20), qui sont courbées vers le haut et disposées en tronc de pyramide et qui portent les roulettes (11) par leurs zones d'extrémité et un panier (12) pourvu d'un dispositif de poussée (14) par leurs zones supérieures recourbées, cependant que les poutres longitudinales (3) sont constituées par des fils ou des tiges (8) superposées et maintenues à distance entre elles d'une manière telle que les poutres longitudinales (3) forment à chaque fois un guidage (7) qui est disposé en étant incliné dans la direction où l'on pousse le chariot à provisions (1), du moins dans la région antérieure des poutres longitudinales (3), et qui est destiné à un support (21), lequel est disposé au-dessous du panier (12) et peut être déplacé selon la direction où l'on pousse le chariot à provisions (1), en étant limité par des butées (10, 20), que le support (21) destiné à y poser des marchandises est incliné vers l'avant dans sa position de non-utilisation en étant disposé, pour sa plus grande partie ou exclusivement, à l'intérieur de la projection verticale du panier et qu'il Fait saillie vers l'arrière au-delà de la projection verticale du panier en position d'utilisation, que le support (21) est monté dans les guidages (7) par son extrémité antérieure et appuyé sur le châssis de roulement (2) à l'extérieur des guidages (7) par son extrémité opposée, et qu'une autre pièce de liaison transversale (15') est disposée au-dessus de la pièce de liaison transversale (15) en reliant les' poutres longitudinales (3) dans la région antérieure de celles-ci pour augmenter la rigidité du châssis de roulement (2) et en pouvant être prévue comme butée (10) pour le support (21), caractérisé par le Fait qu'au moins la plus grande partie d'un plan (27), lequel est identique à la surface de chargement (26) du support (21) qui se trouve entre les poutres longitudinales (3) du châssis de roulement (2) lorsqu'il est vu de dessus, en étant incliné dans la direction où l'on pousse le chariot à provisions (1) dans la position de non-utilisation du support (21), est disposée au-dessus de l'autre pièce de liaison transversale (15') et au-dessus de la ou des butées (10).

2. Chariot à provisions emboîtable selon la revendication 1, caractérisé par le fait que la pièce de liaison transversale (15') est conformée en U, et qu'elle est fixée aux poutres longitudinales (3) du châssis de roulement (2) par sa branche (16) qui est dirigée vers le haut.

3. Chariot à provisions emboîtable selon la revendication 1, caractérisé par le fait que la pièce de liaison transversale (15') est insérée dans les guidages (7) par ses extrémités (18), qu'elle est fixée à ceux-ci (7) et qu'elle présente deux branches (16) qui sont dirigées vers le bas et qui sont reliées entre elles par la partie (17).

4. Chariot à provisions emboîtable selon l'une au moins des revendications 1 à 3, caractérisé par le fait qu'une butée (10) destinée à limiter les déplacements du support (21) dans la position de non-utilisation est constituée par la pièce de liaison transversale (15').

5. Chariot à provisions emboîtable selon l'une au moins des revendications 1 à 3, caractérisé par le fait qu'une butée (10) destinée à limiter les déplacements du support (21) dans la position de non-utilisation est constituée à chaque Fois par une pièce de liaison (9) qui est disposée entre les tiges ou les fils (8).
